Europäisches Patentamt

European Patent Office

Office européen des brevets

(19)

(11) Numéro de publication : **0 236 211 B1**

(12)                    **FASCICULE DE BREVET EUROPEEN**

(45) Date de publication du fascicule du brevet :
27.12.91 Bulletin 91/52

(51) Int. Cl.⁵ : **E06B 3/66, B29C 45/14,**
**B29C 67/18**

(21) Numéro de dépôt : 87400358.5

(22) Date de dépôt : 19.02.87

(54) Vitrage multiple, procédé d'obtention et dispositif pour la mise en oeuvre de ce procédé.

(30) Priorité : 20.02.86 FR 8602344
24.12.86 FR 8618184

(43) Date de publication de la demande :
09.09.87 Bulletin 87/37

(45) Mention de la délivrance du brevet :
27.12.91 Bulletin 91/52

(84) Etats contractants désignés :
AT BE CH DE ES FR GB IT LI LU NL SE

(56) Documents cités :
EP-A- 0 083 797
EP-A- 0 127 546
EP-A- 0 145 354
WO-A-86/05541
AT-B- 253 765
DE-A- 1 504 930
FR-A- 996 815
FR-A- 2 183 736
FR-A- 2 393 663

(56) Documents cités :
US-A- 4 543 283
GLASS AND CERAMICS, vol. 37, nos. 1-2, jan-
vier/février 1980, pages 16-18, Plenum Publishing Corp., New York, US; S.M. KOMSKII et al.:
"Airtight sealing materials for the manufacture of double glass sheets"

(73) Titulaire : SAINT-GOBAIN VITRAGE
INTERNATIONAL
18, avenue d'Alsace
F-92400 Courbevoie (FR)

(72) Inventeur : Canaud, Michel
119, avenue Victor Hugo
F-75116 Paris (FR)
Inventeur : Dewitte, Philippe
4, Route Nationale
F-60150 Thourotte (FR)

(74) Mandataire : Leconte, Jean-Gérard et al
Saint-Gobain Recherche 39, Quai Lucien
Lefranc
F-93304 Aubervilliers Cedex (FR)

## Description

La présente invention a trait à des vitrages multiples formés d'au moins deux feuilles de verre séparées par une lame de gaz et en général d'air assurant l'isolation thermique. L'invention a trait également à une technique d'obtention de tels vitrages multiples.

Le double-vitrage, ou plus généralement le vitrage multiple équipe peu à peu la plupart des habitations de construction récente ou ancienne, en raison de l'amélioration de confort thermique et/ou acoustique apportée et des économies d'énergie qu'il permet de réaliser.

La diffusion du double-vitrage se heurte toutefois à un double problème :

    – en premier lieu, il s'agit encore souvent d'un produit à caractère artisanal aux multiples étapes de fabrication et par là même relativement onéreux,

    – en second lieu, ce type de vitrage s'adapte difficilement aux anciens chassis dont les feuillures permettent uniquement l'introduction d'une seule feuille de verre.

Les double-vitrages actuels sont essentiellement de deux types se différenciant en fonction de la nature du cadre entretoise intercalaire maintenant séparées les feuilles de verre.

Selon un premier type, le cadre entretoise est constitué par des profilés rigides emboîtés métalliques, par exemple en aluminium. Dans ce cas, le cadre n'adhère pas sur les feuilles de verre et n'assure pas de fonction d'étanchéité, celle-ci étant garantie par l'injection d'un joint périphérique, polymérisant in-situ par exemple en polysulfure.

De "Glass and Ceramics" (volume 37, n° 1/2 - 1980 - pages 16-18) il est connu une version améliorée de ce type de vitrage à cadre entretoise rigide selon laquelle on interpose entre le cadre et le verre un joint organique, par exemple à base de polyisobutylène et/ou de caoutchouc butyl, qui garantit essentiellement l'étanchéité à la vapeur d'eau, un second joint, par exemple en polysulfure, silicone ou polyuréthane, mis en place par enduction avant polymérisation, venant renforcer l'étanchéité notamment à l'eau liquide. Ce type de double-vitrage, commercialisé par exemple par la demanderesse sous la marque déposée POLYGLASS est très performant car remarquablement étanche, mais relativement onéreux. Pour sa fabrication, il faut constituer un cadre aux dimensions du vitrage en emboîtant des profilés, remplir ces profilés d'un agent desséchant tel qu'un tamis moléculaire, enduire leurs deux faces opposées externes d'un mastic à base de polyisobutylène et/ou de caoutchouc butyl, placer le cadre ainsi préparé entre deux feuilles de verre, injecter un joint périphérique par exemple en polysulfure dans la gorge délimitée par les bords des deux feuilles de verre d'une part et d'autre part par le profilé, faire polymériser le polysulfure.

Un second type de double-vitrage est constitué par des vitrages ne comportant pas de cadre entretoise rigide, mais deux joints périphériques, c'est-à-dire un cordon intérieur à base de caoutchouc butyl jouant également le rôle de séparateur des feuilles de verre et un joint extérieur en polysulfure. Ce type de vitrage, commercialisé par la demanderesse sous la marque déposée BIVER et décrit notamment dans les publications de brevet FR-2 294 313 et FR-2 294 140 permet une fabrication industrielle automatisée en remplaçant l'opération manuelle d'emboîtement des profilés par une extrusion automatisée in-situ d'un cordon.

Comme dans le cas précédent, le cordon à base de caoutchouc butyl encore appelé cordon butyl adhère au verre et forme une première barrière d'étanchéité, donc qui garantit une plus grande longévité au vitrage exposé aux infiltrations des eaux de pluie, de la vapeur d'eau en cas d'atmosphère humide, notamment lorsqu'il s'agit de fenêtres pour cuisines, salles d'eau ou autres, et aux variations de climat, qui font que suivant la température extérieure, la lame de gaz intercalaire a tendance à se dilater ou au contraire à se contracter, entraînant par là une respiration du vitrage qui le fragilise essentiellement aux niveaux des joints d'étanchéité.

Cette respiration du vitrage multiple constitue un problème général à tous les vitrages multiples et impose de grandes précautions au moment de la pose des joints périphériques qui sont déposés en injectant le polysulfure, polyuréthane ou silicone dans une gorge ouverte simplement délimitée par 3 côtés et qui, de ce fait, présentent au moment de leur injection dans cette gorge une viscosité minimale pour éviter que la matière ne s'écoule hors de la gorge. De fait, cette injection demande tout un tour de main pour éviter des fuites au niveau de l'interface verre-joint, notamment dans les angles et veiller à ce que des bulles d'air ne se trouvent emprisonnées à l'interface des joints, bulles d'air qui en se dilatant et se comprimant tour à tour du fait de la respiration du vitrage pourraient conduire à une perte d'étanchéité de celui-ci.

Il est connu de FR-A-2 183 736 de renforcer l'étanchéité du vitrage en appliquant sur la matière adhésive, interposée entre les feuilles de verre ou interposées entre celles-ci et un élément espaceur, une matière de protection dont la composition est différente que celle de la matière adhésive et est notamment plus hydrophobe. Cette matière de protection adhère fortement à la matière adhésive par la réalisation d'un accrochage chimique. Néanmoins cette matière de protection ne participe pas à la cohésion du vitrage et ne contribue donc pas à en améliorer la stabilité dimensionnelle.

Les vitrages selon l'art peuvent ainsi présenter des défauts de fabrication, dont les conséquences pratiques n'interviennent que quelques années après la mise en place définitive du vitrage ne peuvent être éliminés que par le recours d'une part à un personnel très qualifié et d'autre part à des agents chargés de vérifier la qualité du travail après chaque étape de fabrication ; autrement dit avec l'aide d'une infrastructure onéreuse.

La présente invention a pour objet principal un nouveau type de vitrages multiples présentant d'une manière certaine une parfaite étanchéité, sans qu'il soit nécessaire d'augmenter les vérifications.

Conformément à la revendication 1, l'invention propose un vitrage multiple comportant au moins deux feuilles de verre séparées par une lame de gaz intercalaire et définie par un cadre entretoise constitué au moins pour sa surface de contact avec les feuilles de verre par un mastic à base de caoutchouc butyl et/ou de polyisobutylène, et recouvert par un joint périphérique en polyuréthane, étanche à l'eau et maintenant les feuilles de verre dans leurs positions relatives, ledit joint périphérique étant obtenu par injection réactive sous une pression comprise entre 3 et 10 bars et adhérant d'une manière cohésive avec le mastic. Le vitrage selon l'invention est ainsi un vitrage à double barrière continue.

Il doit être noté que par mastic à base de caoutchouc butyl et/ou de polyisobutylène, on entend un mastic restant en permanence malléable, conforme par exemple à l'enseignement du brevet FR-2 294 313. Un tel mastic peut parfaitement assurer la séparation des deux feuilles pendant une période de quelques heures, soit très largement supérieure au temps nécessaire à la réalisation complète du vitrage, mais isolément, ne peut tenir lieu d'espaceur pendant toute la durée de vie du vitrage, soit au minimum dix ans. Le joint périphérique extérieur sert donc également, dans le type de vitrage visé par l'invention, d'espaceur - en collaboration avec le cadre entretoise - et doit occuper la gorge délimitée par les feuilles de verre d'une part et le cadre entretoise d'autre part.

Selon l'invention, le joint périphérique extérieur en polyuréthane est tel qu'il prend en masse sur le joint intérieur, ou la partie organique de ce joint intérieur, à base de polyisobutylène et/ou de caoutchouc butyl. Par prise en masse, il faut entendre la réalisation de liaisons telles que la séparation des deux matières est impossible, à moins d'en détruire une. Le problème de l'interface entre les deux joints est donc résolu par une interpénétration des deux matières au niveau de l'interface, sans pour autant supprimer le principe d'une double barrière d'étanchéité.

Obtenu par injection réactive, le joint périphérique en polyuréthane est ainsi le produit de condensation in-situ d'un mélange réactif constitué de deux réactifs à l'état liquide, un polyisocyanate et un polyol, dont la fluidité est voisine de celle de l'eau dans les conditions normales de température et de pression. Le joint périphérique est ainsi un liquide, figé par la réaction de polymérisation mais qui avant que cette réaction ne se produise peut occuper même les plus petits volumes.

La pression d'injection comprise entre 3 et 10 bars est suffisante pour qu'aucune bulle d'air ne soit emprisonnée au niveau de l'interface entre les joints. Tel n'était pas le cas avec les mastics d'étanchéité de l'art, tels des polysulfures ou des élastomères de silicone, dont la viscosité au moment de leur injection par une buse tournant autour du vitrage est assez comparable à celle de la mélasse, mastics qui nécessitaient ce pourquoi des modes de mises en oeuvre très élaborées.

De préférence, on utilise un polyisocyanate aliphatique, ce qui supprime pratiquement toute sensibilité du polyuréthane aux ultra-violets. Ce polyuréthane présente une dureté Shore instantanée comprise entre 50 et 70 Shore A, un allongement à la rupture de 400 % à 20°C et une faible déformation permanente à la compression.

De préférence le mélange réactif est tel que la réaction de condensation s'opère dans un temps optimum à une température comprise entre 40 et 70°C.

Selon une autre caractéristique particulièrement préférée de l'invention, le joint périphérique externe occupe non seulement la gorge délimitée par les deux feuilles de verre d'une part et le joint interne d'autre part, mais aussi recouvre la partie périphérie des faces externes du vitrage, masquant ainsi tout ou partie des joints.

Cette disposition est particulièrement préférée pour les avantages de tout ordre obtenus. Tout d'abord, elle améliore l'étanchéité à l'eau liquide au niveau de l'interface joint-verre, cette interface constituant d'une manière systématique le point faible de tout vitrage multiple. Notons tout d'abord qu'étant donné qu'il est obtenu selon l'invention par condensation in-situ d'un mélange liquide, le joint polyuréthane épouse fermement les contours du verre et qu'il se produit dès lors un effet de ventouse qui contribue à l'étanchéité de l'interface joint-verre. Mais de plus, dès lors que le joint polyuréthane est placé de part et d'autre des feuilles de verre, le chemin que devrait parcourir l'eau avant d'atteindre le second joint, qu'il lui faudrait encore traverser ultérieurement, est ainsi fortement allongé, de sorte que l'on diminue encore la probabilité d'infiltration. De plus, il a été déjà évoqué le problème posé par les contractions et dilatations successives de la lame de gaz intercalaire qui entraîne une "respiration" du vitrage. Si comme selon la caractéristique préférée ici développée, le joint polyuréthane est placé avec un recouvrement du vitrage, le phénomène de respiration est auto-compensé.

En effet, en cas de contraction du vitrage, la partie du joint périphérique intérieure au vitrage multiple est placée en état de compression et s'oppose fortement aux infiltrations. Par contre, en cas de dilatation, les feuilles de verre tendent à s'écarter mutuellement et dans ce cas, la partie extérieure au vitrage du joint périphérique s'oppose à ce mouvement. Dans tous les cas, une partie du joint voit son rôle de barrière accru.

A cet aspect étanchéité s'ajoute un aspect protection du vitrage et plus particulièrement de ses arêtes avec notamment la possibilité d'empilement des vitrages les uns sur les autres sans devoir interposer des cales, les surfaces vitrées n'étant pas en contact les unes avec les autres du fait de la surépaisseur de joint et avec aussi une moindre fragilité qui facilite grandement toutes les opérations de manutention et de pose sur chantiers.

Enfin s'ajoute un aspect esthétique, la partie extérieure du joint polyuréthane masquant sa propre partie intérieure et le premier joint interne et pouvant soit être teintée soit être peinte pour s'accorder aux huisseries.

Selon la revendication 9, l'invention a également pour objet un procédé de fabrication d'un vitrage multiple selon l'invention, procédé se caractérisant en ce qu'il comportant la pose sur une première feuille de verre d'un cadre entretoise, l'application sur ce cadre d'une seconde feuille de verre, l'amenée du vitrage provisoire au poste de moulage, le plaquage par traction de chaque feuille de verre contre une paroi du moule et l'injection dans le moule du mélange réactif sous une pression comprise entre 3 et 10 bars.

Ainsi, dans une première étape on réalise de manière connue un double vitrage provisoire formé de deux feuilles de verre parallèles maintenues espacées par un cadre entretoise dont au moins la surface de contact avec les feuilles de verre est à base de caoutchouc butyl et/ou polyisobutylène et dans une seconde étape, on place un moule chauffé autour de la zone des bords du vitrage provisoire, délimitant ainsi sur toute la périphérique du vitrage une cavité que l'on rend alors étanche en exerçant une traction sur chaque feuille de verre et on injecte le mélange réactif dans cette cavité.

Un moulage par injection réactive signifie que le mélange réactif est introduit à l'état liquide et va occuper parfaitement grâce à sa fluidité tout le volume disponible, tous les interstices et qui en épousant exactement les contours du verre et surtout du cadre entretoise tout en empêchant l'emprisonnement de bulles d'air à l'interface des deux joints.

Un autre avantage du procédé de moulage par injection réactive vient de ce qu'il permet, sans craindre qu'ils ne collent entre eux ou se rayent, de manipuler les vitrages dès leur sortie du moule. Autrement dit, les vitrages sont tout de suite utilisables, alors que pour la préparation d'un double-vitage comportant un joint périphérique en polysulfure ou en silicone, il faut tout d'abord injecté le joint avec une buse tournant par exemple autour du vitrage, puis faire polymériser le joint pendant un temps qui n'est jamais inférieur à une heure trente et souvent de l'ordre de 12 voire 24 heures, soit dans une étuve soit dans une chambre à température ambiante où les vitrages doivent être conduits avec de grandes précautions, le joint avant polymérisation pouvant être comparé comme déjà indiqué à un dépôt de mélasse.

La seconde caractéristique du procédé selon l'invention est que le vitrage est placé en état de traction pendant le moulage du joint périphérique, ce qui assure le plaquage du vitrage contre le moule. De préférence, cet effort de traction est exercé par aspiration sous vide, mais d'autres moyens, notamment des moyens mécaniques sont susceptibles d'être utilisés.

Cette caractéristique peut être exploitée, car la demanderesse a constaté expérimentalement que d'une manière surprenante, les joints à base de caoutchouc butyl et/ou de polyisobutylène ne réagissent alors pas en se décollant du verre, mais en s'amincissant dans leur partie centrale. L'étanchéité créée entre le moule et le verre ne se traduit donc pas en une fuite au niveau du cadre entretoise.

Le procédé selon l'invention permet d'exploiter avantageusement cette propriété des joints à base de caoutchouc butyl et/ou de polyisobutylène. Ainsi par un étirement sous vide, il est possible d'obtenir un allongement de près de 20% de l'épaisseur du cordon, allongement qui peut être porté si nécessaire à près de 25% en utilisant des moyens auxiliaires d'étirement mécaniques tels des ventouses placées sur les deux faces opposées du double vitrage. Ceci peut être fort utile pour la fabrication de vitrages multiples dont la lame d'air intercalaire a une épaisseur par exemple supérieure à 20 mm, vitrages qui sans cela demanderaient de grandes précautions au moment de la pose du cordon de caoutchouc butyl.

Inversement, la fermeture du moule peut être utilisée pour réduire par compression d'épaisseur du cordon intérieur et peuvent avantageusement se substituer à l'opération de pressage des feuilles de verre.

Dans tous les cas de figures, le procédé selon l'invention permet d'obtenir un cordon intérieur parfaitement calibré de même que le gabarit extérieur du vitrage est parfaitement conforme dans les trois dimensions de l'espace au gabarit souhaité.

L'injection du mélange réactif s'effectue avec une pression comprise entre 3 et 10 bars, pour un temps d'injection d'au plus 60 secondes, avec des mélanges réactifs dont le temps de fil est de quelques minutes et de préférence de l'ordre de 90 secondes. La cavité de moulage dans laquelle s'effectue l'injection est de préférence placée sous une faible dépression pour aider à l'évacuation de l'air. Dans ce cas, le procédé est beaucoup moins rapide, mais il est beaucoup plus simple d'étancher alors la cavité d'injection de sorte que les tolérances d'usinage du moule sont plus grandes, ce qui bien sur se traduit par un plus faible coût D'autre part, les mélanges réactifs sont alors susceptibles d'être teintés dans la masse.

L'invention concerne également un dispositif revendiqué en 15, pour la mise en oeuvre du procédé selon l'invention. Ce dispositif est constitué d'un moule formé de deux demi-moules laissant deux ouvertures - une lame d'injection alimentée au travers d'une chambre d'homogénéisation et un évent - ce dispositif comportant des moyens de traction des feuilles de verre constitués par des chambres placées sous dépression au travers de canaux et l'étanchéité de la chambre d'injection étant obtenue par des arêtes présent sur chaque demi-moule.

D'autres particularités et caractéristiques de l'invention apparaissent dans la description des figures annexées qui montrent :

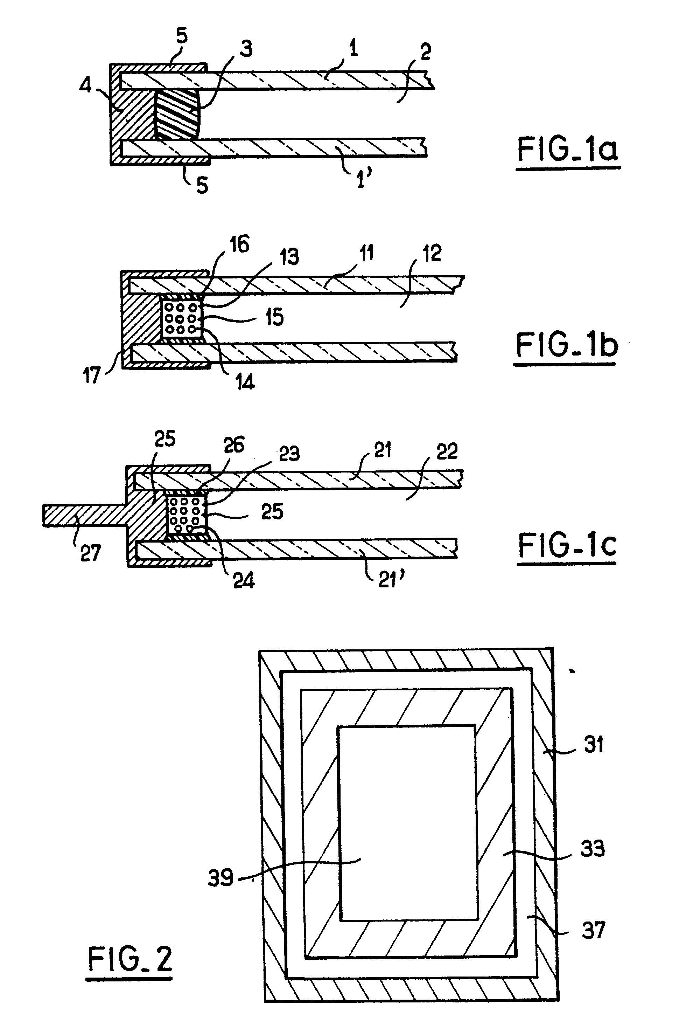

. **figure 1** : une coupe verticale de différents types de vitrages multiples selon l'invention (schémas 1a, 1b, 1c),

. **figure 2** : un schéma de principe en vue de dessus d'un moule permettant la réalisation de vitrages conformes à ceux de la figure 1,

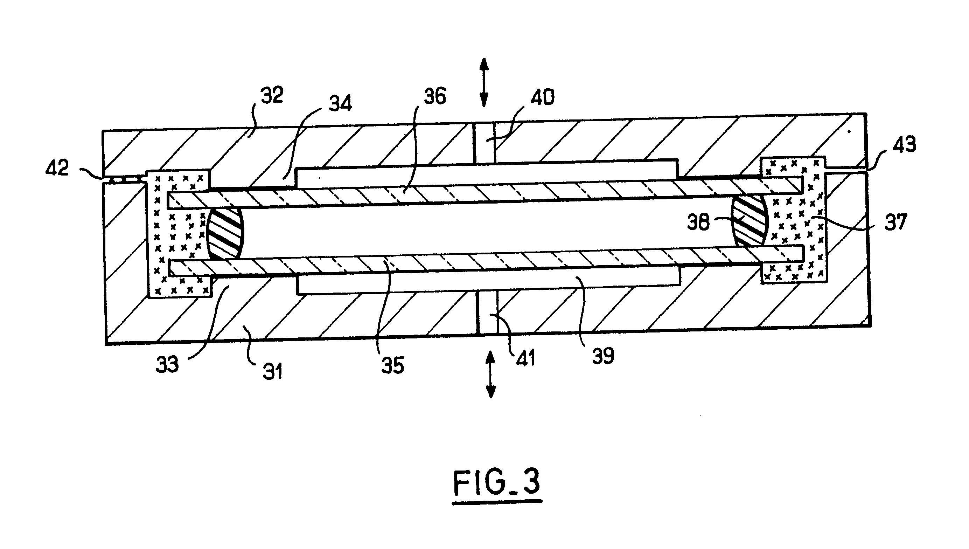

. **figure 3** : une coupe verticale suivant le plan A-A de la figure 2,

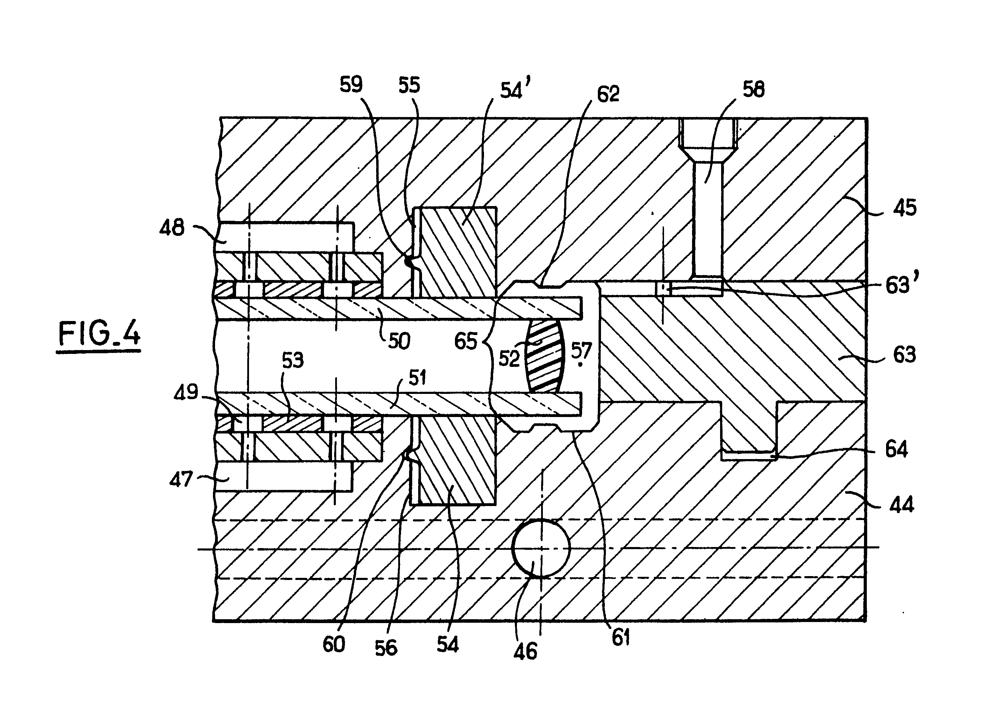

. **figure 4** : une coupe verticale d'un moule selon l'invention, plus particulièrement adapté à l'injection sous basse pression,

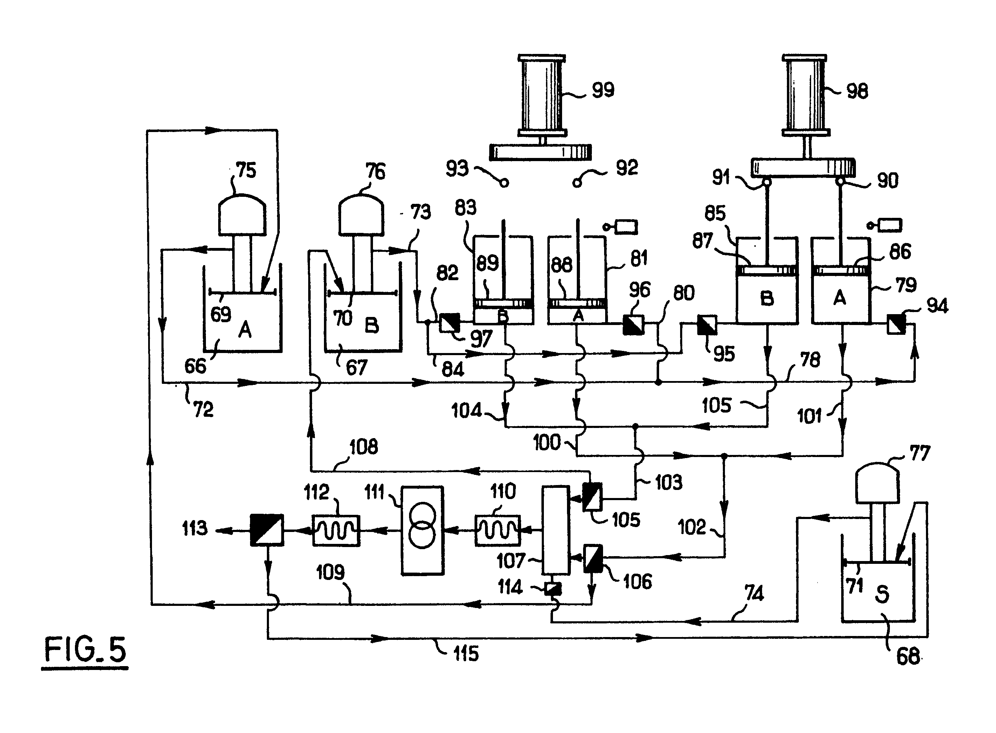

. **figure 5** : un schéma d'un circuit matière pour les composés liquides,

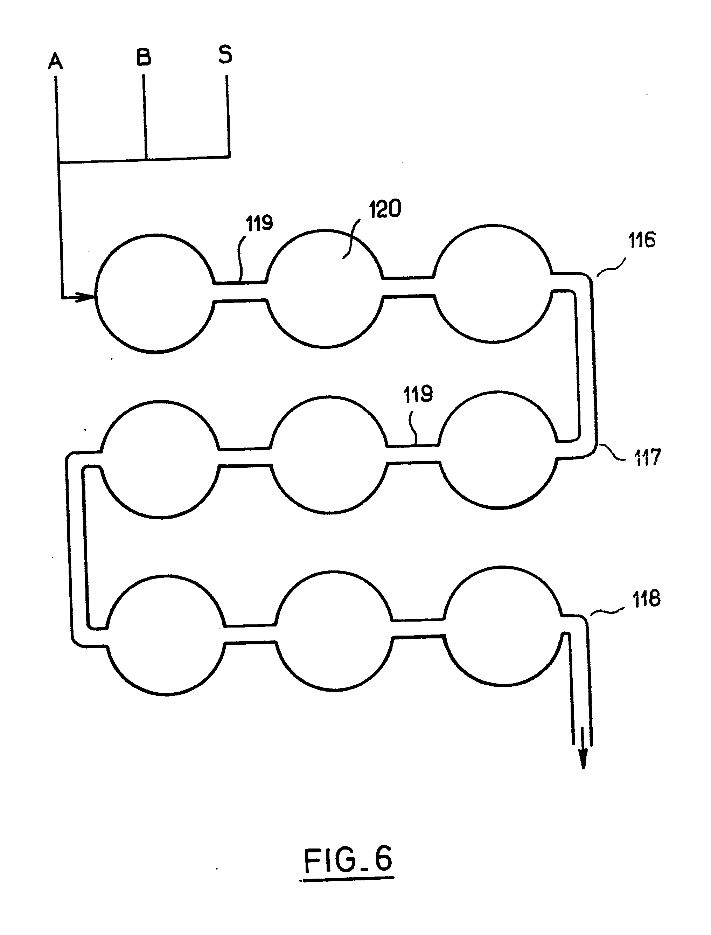

. **figure 6** : un schéma d'un mélangeur statique.

Un vitrage selon l'invention tel que représenté au schéma 1a comporte deux feuilles de verre 1, 1', parallèles et maintenues séparées par une lame d'air deshydraté 2. L'étanchéité et l'espacement sont assurés par deux cordons 3, 4 en matière plastique.

Le cordon intérieur 3 est constitué par un élastomère extrudé sous forme d'un cordon, directement sur le vitrage et est du type à bascule de caoutchouc butyl et de polyisobutylène décrit dans le brevet FR-2 294 313. Du fait de sa composition et de sa température relativement élevée peu après son extrusion, le caoutchouc butyl adhère bien au verre, et constitue une première barrière d'étanchéité. De plus, contient des quantités importantes d'agent deshydratant, notamment du type tamis moléculaire et assure de ce fait l'étanchéitè à la vapeur d'eau de la lame d'air 2 intercalaire.

Après la pose du cordon intérieur 3 à par exemple 14mm du bord de la feuille de verre 1, la feuille 1' est mise en place, ce qui n'entraîne pas de déformation immédiate du cordon en raison de la grande résistance aux chocs du caoutchouc butyl. Comme le caoutchouc butyl a une légère tendance à se décoller du verre en présence d'eau liquide et reste en permanence assez maléable et sensible au fluage, il faut le recouvrir et mettre en place un espaceur permanent et un joint d'étanchéité à l'eau liquide. Cette triple fonction est assurée par le joint périphérique 4.

Selon l'invention, ce joint périphérique 4 est constitué par un polymère organique qui au cours de sa polymérisation adhère en masse, d'une manière cohésive avec le cordon à base de caoutchouc butyl. De préférence on utilise du polyuréthane, produit de condensatin d'un mélange de polyols et de polyisocyanates.

Pour un double vitrage de qualité, il est nécessaire que le polyuréthane présente une dureté instantanée comprise entre 50 et 70 Shore A. La dureté instantanée est mesurée avec un duromètre aux normes DIN 53505 et ISO R868 ; la valeur indiquée correspond à la plus grande déviation observée de l'aiguille du duromètre. De plus, sa déformation rémanente à la compression doit rester inférieure à 25% après une épreuve de 24 heures à 70°C.

De préférence, le polyuréthane doit présenter après polymérisation un taux de matière sèche supérieure à 97%, de cette façon il n'apparait pas de point de rosée chimique dû à la condensation des solvants présents dans le joint.

Pour favoriser la formation de liaisons fortes coercitives entre le joint polyuréthane et le joint à base de caoutchouc butyl, il est préférable d'avoir une bonne homogénéité thermique. Comme généralement le joint périphérique polyuréthane est moulé directement après la pose du cordon intérieur à base de caoutchouc butyl, c'est-à-dire à un moment où ce dernier présente une température voisine de 40-70° C, on choisit de préférence un polyuréthane dont la température optimale de polymérisation par injection réactive est comprise dans ce domaine de température.

De préférence, le polyuréthane présente un temps de fil inférieur à 2 min, ce qui est le cas par exemple de celui commercialisé par la société REVCO sous la dénomination REVORIM 20A ref : LABO I 0021/001 A et I 0021/003 B. Ce mélange comprend un composé A à base de polyols, type polyéthers, dont la masse volumique au pycnomètre, à 23° C est de 1,05 g/cm³ et de même un extrait sec supérieur à 98%. Un mélange dans un rapport pondéral A/B = 53,8/46,2 présente un temps de démoulage de 1 min 30 à 23° C.

De tels polyuréthanes assurent parfaitement la triple fonction conférée au joint périphérique, mais il est à noter que cette triple fonction n'est pas spécifique des joints en matière plastique moulée, du type polyuréthane. En effet, elle est assurée dans les vitrages de l'art par des joints en matière plastique injectée du type polysulfure. Toutefois, un joint en matière plastique moulée du type polyuréthane présente des avantages tant dans le produit qu'il permet d'obtenir, que dans la fabrication de ce produit.

Du point de vue du produit final, un vitrage multiple tel que représenté à la figure 1a présente tout d'abord une remarquable étanchéité due d'une part à l'imperméabilité du polyuréthane et d'autre part aux obstacles placés sur le trajet de l'eau jusqu'au cordon intérieur. En effet, l'interface verre-joint constitue une voie privilégiée d'infiltrations, avec un joint moulé, l'épaisseur de cette fuite est déjà réduite du fait que le joint épouse parfaitement les micro-contours de la surface du verre et est plaqué contre celle-ci à la manière d'une ventouse. De plus, si comme ici représenté le joint moulé en polyuréthane comporte des ailes 5 qui recouvrent en partie la surface extérieure du vitrage, le cheminement que doit accomplir l'eau jusqu'au cordon est considérablement prolongé de sorte que la probabilité pour que celle-ci réussisse à traverser est fortement réduite. Une telle configuration permet également de masquer le cordon intérieur.

Un autre avantage vient de ce que les dimensions extérieures du vitrage surmoulé correspondent exactement aux dimensions du moule et sont donc parfaitement définies alors qu'il est parfois difficile de maitriser parfaitement les dimensions des feuilles de verre. Il est également très avantageux de pouvoir obtenir une dimension extérieure de vitrage unique pour toute gamme d'épaisseurs de lames d'air et de feuilles de verre. Ceci permet par exemple d'offrir sur la base d'une uisserie unique, le choix entre divers types d'isolation thermique ou même phonique.

Notons également que les arêtes du vitrage multiple plus spécialement fragiles et blessantes sont ainsi protégées ce qui facilite le stockage, la manipulation et la pose du vitrage qui peut même supporter des chocs.

Le schéma 1b montre un double-vitrage constitué par deux feuilles de verre 11, 11' séparées par une lame d'air 12 deshydraté ou éventuellement par tout autre gaz choisi pour son pouvoir isolant. Cette lame intercalaire 12 est délimitée par des profilés rigides 13, par exemple en aluminium. Ces profilés contiennent des quantités importantes d'agent deshydratant 14 par exemple sous forme de billes de tamis moléculaire et en contact avec la lame d'air intercalaire par la fente 15. L'étanchéité entre les feuilles de verre et les profilés est obtenue par le dépôt d'un fin cordon intercalaire 16 formé d'un mastic à base de polyisobutylène et/ou de caoutchouc butyl, il est ainsi possible d'utiliser un mélange réactif polymérisant pour donner le joint 17. Un tel vitrage présente une qualité comparable au précédent au point de vue de l'étanchéité et de la durée de vie. Son coût est plus important, mais en revanche, il est bien adapté pour du travail sur mesure, dans le cadre d'une rénovation par exemple.

C'est dans un tel cadre que se rencontrent plus spécialement les vitrages du type représenté au schéma 1c. Ce vitrage comporte les différents éléments (21, 21', 22, 23, 24, 25, 26 et 27) correspondants aux éléments (11, 11', 12, 13, 14, 15, 16 et 17) des vitrages du type précédent, mais sont plus spécialement caractérisés par un appendice 28 du joint moulé 27, appendice destiné plus spécialement au montage notamment dans des anciennes feuillures prévues uniquement pour recevoir des vitrages simples. Un seul appendice a été monté, mais il est possible d'en prévoir plusieurs de toutes les formes voulues, ou des excroissances, etc...

Notons que rien n'empêche de prévoir de tels appendices avec un vitrage du type de la figure la ou toutes autres excroissances permettant par exemple le montage du vitrage en feuillures sèches.

La combinaison des ailes 5 de recouvrement et la mise en oeuvre du joint périphérique et des excroissances de tout type 28 permettent l'obtention de vitrages multiples dont ce que nous appellerons la partie périphérique de montage, c'est-à-dire la zone utile de montage destinée à être placée dans une feuillure et maintenue à demeure dans celle-ci, a une taille parfaitement indépendante de l'épaisseur de la baie proprement dite, c'est-à-dire de l'épaisseur de la lame d'air et des feuilles de verre.

De plus, le montage de la baie, que ce soit pour de la rénovation ou même de la construction neuve, peut être par un emplacement judicieux des excroissances 28 très simplifié ; le vitrage peut ainsi être directement cloué ou vissé sur l'encadrement.

Une autre caractéristique particulièrement originale du vitrage multiple selon l'invention provient de son procédé de fabrication que nous allons décrire à l'aide des figures 2 et 3.

Après avoir été constitué, l'ensemble formé de deux feuilles de verre et du cordon intérieur à base de caoutchouc butyl et/ou de polyisobutylène est placé dans un moule dont un schéma de principe est donné en vue de dessus (figure 2) et en coupe (figure 3).

Le moule utilisé comporte un élément inférieur 31 et un élément supérieur 32 susceptible d'être retiré pour permettre l'introduction et le retrait du vitrage multiple. Chaque demi-moule comporte une patte 33 (respectivement 34) sur laquelle vient s'appuyer la feuille de verre 35 (respectivement 36) délimitant sur tout le pourtour du vitrage une rainure 37 dans laquelle est injecté le mélange réactif. Etant donné que les deux feuilles de verre sont au moins partiellement espacées par un cordon 38 à base de caoutchouc butyl et/ou de polyisobutylène, l'étanchéité entre le verre et le moule au niveau des pattes 33 et 34 ne peut pas être obtenue par compression sous peine d'un écrasement du cordon 38. Pour y remédier, on prévoit une chambre 39 de dépression dans laquelle est effectuée par les canaux 40, 41 un vide léger créé par exemple à l'aide d'une pompe à vide ici non représentée qui maintient le verre plaqué contre les pattes 33, 34.

Notons que les canaux 40, 41 permettent également d'introduire de l'air sous pression à la fin de l'opération de moulage de manière à faciliter le décollage et l'évacuation du vitrage achevé.

Selon une caractéristique particulièrement importante de l'invention, le vide créé dans la chambre de dépression 39 peut être utilisé pour modifier ou ajuster l'épaisseur du cordon intercalaire à base de caoutchouc butyl afin de la rendre de manière parfaitement certaine à une épaisseur nominale. En effet, si on utilise le vide pour écarter les feuilles de verre, on obtient un amincissement du cordon dans sa partie ventrue, sans aucune modification de sa surface de contact avec le verre et donc sans conséquence au niveau de l'étanchéité assurée par ce joint. Cette propriété peut éventuellement être exploitée pour la fabrication de double-vitrages ayant des lames d'air de l'ordre par exemple de 2 cm. Elle permet aussi de s'affranchir des problèmes susceptibles d'être entraînés par un éventuel fluage du cordon intérieur.

Réciproquement, le cordon peut être comprimé au moment de la fermeture du moule. Ainsi, il est inutile de presser les feuilles de verre contre le cordon à base de caoutchouc butyl au moment de la constitution du vitrage multiple provisoire, ce pressage s'effectuant avantageusement au moment de la fermeture du moule.

Chaque demi-moule 33, 34 est pourvu de moyens de chauffage uniforme ; de préférence on utilisera des demimoules pourvus d'une circulation d'un fluide caloporteur comme de l'huile.

L'injection s'effectue au travers de la lèvre d'injection 42 située sur un des côtés du moule, entre les deux demi-moules 31, 32. Cette lèvre est de préférence extrêmement fine, et par conséquent grossièrement schématisée sur la figure pour plus de clarté. En amont de la lèvre d'injection 42 se trouve une chambre d'homogénéisation encore du type couramment appelé "queue de carpe". Cette chambre est elle-même alimentée par un mélangeur statique et une pompe d'injection. Ces différents éléments étant bien connus de l'art et ici non représentés.

L'air présent dans la cavité délimitée par les deux demi-moules 31, 32 s'échappe au travers des évents 43 placés sur le côté du moule opposé au bord d'injection. De préférence, ces évents 43 sont à un niveau plus élevé que celui de la lèvre d'injection 42. Pour cela, le moule sera par exemple incliné suivant un angle par rapport à l'horizontal de quelques degrés voir même jusqu'à 30°, le bord d'injection se trouvant alors en bas.

La surface extérieure du verre destinée à être recouverte par le joint moulé polyuréthane peut être traitée avec un primaire ou promoteur d'adhérence, par exemple avec un silane en solution à 1% dans de l'éthanol. L'emploi d'un tel primaire n'est pas obligatoire et de plus, seule la surface extérieure du verre qui est très facilement accessible peut recevoir ce traitement, de sorte que le primage ne pose aucune difficulté particulière.

De préférence, on pulvérise sur les parois du moule un agent démoulant par exemple du type ACMOS Fluoricon 35-20, mélange de cire et de white spirit. Cet agent démoulant peut aussi être une peinture polyuréthane, ce qui permet alors de fournir un vitrage avec un joint coloré, par exemple en blanc, le joint étant naturellement noir.

On peut également utiliser un moule dont la zone d'injection est schématisée à la figure 4.

Les moules inférieur 44 et supérieur 45 sont calorifugés à l'aide d'un circuit intérieur 46 parcouru par un liquide - eau ou huile calorifugé à par exemple 60°C. Comme précédement ils sont pourvus de chambres de dépression 47, 48 agissant par les canaux 49 sur les plaques de verre 50, 51 du vitrage isolant, qui ne comporte à ce stade qu'un joint périphérique 52 en caoutchouc butyl. Pour un contact plus doux avec le verre, les canaux 49 traversent des tapis en caoutchouc 53. Pour éviter que la feuille de verre ne glisse au moment ou après la fermeture moule, il est prévu des patins 54, 54' en matière plastique moulée incompressible, par exemple en un polyuréthane d'une dureté appropriée. Ces patins 54, 54' sont posés dans des logements 55, 56 des demi-moules. Ces logements 55, 56 sont, comme ici représentés d'une taille supérieure à la taille des patins 54, 54'. En conséquence, même sous la pression des feuilles de verre, les patins 54, 54' occupent toujours un même volume et ils ne contribuent pas à étancher la cacité 57 dans laquelle est injecté le mélange réactif par l'injecteur 58. Les patins 54, 54' sont fixés par des ergots 59, 60.

La cavité 57 est ici délimitée par les parois 61 du moule inférieur 44 et 62 du moule supérieur 45 et par un espaceur 63 comportant un renflement 64 se logeant dans une cavité 64 du moule inférieur. Un tel espaceur 63 ne convient que pour des pressions d'injection du mélange réactif, pressions pour lesquelles une étanchéité peut être obtenue simplement en jouant sur la compressibilité de l'espaceur 63 en matière plastique. L'espaceur 63, par exemple en aluminium, permet de plus de faire varier la forme géométrique extérieure du joint moulé en fonction par exemple de la fenêtre à laquelle le vitrage est destiné. Ainsi des plots 63' sont ici prévus pour délimiter des trous le long de l'excroissance réalisée avec la forme de moule ici représentée.

L'étanchéité au niveau du vitrage est de préférence réalisée sur une arête 65, dont la largeur est par exemple égale à 5/10 de mm, faisant légèrement saillie par rapport aux patins 54, 54', et sur laquelle on vient faire plaquer la feuille de verre quand on place les chambres 47 et 48 en dépression. Compte tenu d'inévitables petites imperfections de la surface du verre et de l'usinage du moule, la ligne d'étanchéité peut en effet dans des cas extrêmes, se déplacer sur tous les points de l'arête 65, pour avoir un rebord du joint parfaitement net, il est donc préférable que l'arête soit aussi fine que possible.

Un tel moule peut être réalisé en tout matériau facilement usinable tel l'acier, l'aluminium ou même le bois ou le plexiglas. De préférence, il est muni d'un revêtement au téflon qui supprime l'emploi d'un agent démoulant même si on souhaite un joint coloré, car les polyuréthanes condensant en environ 90 secondes sont susceptibles d'être teintés dans la masse.

Notons enfin au sujet du moule que la dépression peut être avantageusement maintenue sur une seule des faces du vitrage au moment de l'ouverture du moule, puis être supprimée et remplacée au contraire par une légère surpression qui aide à l'évacuation du vitrage.

Pour la mise en oeuvre du procédé d'injection selon l'invention, on doit particulièrement veiller à ce que les deux composants soient intimement mélangés dans les proportions souhaitées, tout en préservant un débit d'alimentation élevé compatible avec des productions de grandes séries. Pour ce faire, un circuit matière tel celui schématisé à la figure 5 est plus particulièrement préféré.

Ce circuit comporte en amont des réservoirs 66, 67 et 68 dans lesquels sont stockés respectivement les composants A et B et un solvant S des deux composants, tel par exemple du benzène pour du polyuréthane. Ces réservoirs 66, 67 et 68 sont fermés par des couvercles étanches 69, 70 et 71. De plus pour les produits sensibles à l'oxygénation et à l'hydratation, il est prévu une légère supression d'azote ou d'air deshydraté. Cette mise en pression peut aussi servir au gavage des circuits 72, 73, 74, gavage qui peut être aussi effectué par des pompes adaptées aux composants telles des pompes à billes 75, 76, 77.

A chaque réservoir de composant A et B sont associées deux chambres de dosage pour des dosages volumétriques, elles-mêmes groupées par paire. Le circuit 72 du composé A se prolonge ainsi en 78 jusqu'à la chambre de dosage 79 et en 80 jusqu'à la chambre de dosage 81. De même le circuit 73 du composé B remplit par la canalisation 82 la chambre 83 et par la canalisation 84 la chambre 85.

Chaque chambre est fermée par un piston flottant 86, 87, 88, 89 dont la tige en remontant vient heurter un fin de course 90, 91, 92, 93. L'occultation de chaque fin de course 90, 91, 92, 93 déclenche la fermeture d'une électrovanne associée 94, 95, 96, 97. Chaque chambre de dosage est ainsi remplie indépendamment des autres. Le niveau des fins de course 90, 91, 92, 93 peut bien sur être réglé pour modifier les rapports de mélange composé A / composé B.

La consigne de fermeture des électrovannes (94, 95) respectivement (96, 97) d'une même paire de chambres de dosage commande la poussée du vérin associé 98 respectivement 99 qui poussent les produits hors des chambres au travers de clapets anti-retour situés au fond de celles-ci. Le produit A rejoint ainsi par les conduites 100 ou 101 la conduite 102, tandis que le produit B rejoint la conduite 103 en transitant par les conduites 104 ou 105. Ces conduites 102 et 103 sont fermées par des vannes 105 et 106 qui dirigent les produits soit vers le bloc de jonction 107 (injection en cours), soit par les conduites 108 et 109, vers les volumes réserves 66 et 67, pour un fonctionnement en circuit fermé. Si l'injection est en cours, les composants A et B traversant un premier mélangeur statique 110, sont pris en charge par la pompe d'injection 111 qui débite le mélange au travers d'un second mélangeur statique 112 puis par la conduite 113 jusqu'au moule.

Revenons un instant sur le fonctionnement en circuit fermé pour préciser qu'alors le bloc de jonction 107 est alimenté par la conduite 74 en solvant, après ouverture de la vanne 114. Les mélangeurs statiques 110, 112 et la pompe 111 sont ainsi nettoyés et le solvant est renvoyé par la conduite 115 jusqu'au réservoir 68 après passage sur un tamis de décantation.

Un tel circuit matière est à la fois très sur et très rapide, la longueur des conduites étant très faible, ce qui assure un acheminement des composés dans les meilleures conditions.

La figure 6 illustre enfin un mélangeur statique adapté à une bonne mise en oeuvre de l'invention et qui comporte trois séries 116, 117 et 118 de trois chambres coaxiales 120. Ces chambres, communiquant par des conduites 119 de petit diamètre. Le mélange des composants est ainsi détendu dans chaque chambre 120 puis laminé dans les conduites 119. Notons que la position en axes des chambres supprime tout chemin préférentiel pour le mélange.

## Revendications

1. Vitrage multiple comportant au moins deux feuilles de verre (1, 11, 21) séparées par une lame (2, 12, 22) de gaz intercalaire et définie par un cadre entretoise (3, 13, 16) constitué au moins pour sa surface de contact (3, 16) avec les feuilles de verre (1, 11, 21) par un mastic à base de caoutchouc butyl et/ou de polyisobutylène, et recouvert par un joint périphérique (4, 17) en polyuréthane étanche à l'eau et maintenant les feuilles de verre (1, 11, 21) dans leurs positions relatives, **caractérisé** en ce que ledit joint périphérique (4, 17) est obtenu par injection réactive sous une pression comprise entre 3 et 10 bars et adhère d'une manière cohésive avec ledit mastic.

2. Vitrage multiple selon la revendication 1, **caractérisé en ce que** le cadre entretoise (3) est constitué par un cordon à base de caoutchouc butyl et/ou de polyisobutylène.

3. Vitrage multiple selon la revendication 1, **caractérisé en ce que** le cadre entretoise est constitué par un profilé rigide (13) recouvert sur sa surface de contact (16) avec le verre par un joint à base de caoutchouc butyl et/ou de polyisobutylène.

4. Vitrage multiple selon l'une des revendications précédentes, **caractérisé en ce que** le polyuréthane à un temps de fil inférieur à 2 minutes.

5. Vitrage multiple selon l'une des revendications précédentes, **caractérisé en ce que** le polyuréthane a après condensation une dureté instantanée comprise entre 50 et 70 Shore A, un allongement à la rupture de 400 % à 20°C et une déformation rémanente à la compression inférieure à 25 % après une épreuve de 24 heures à 70° C.

6. Vitrage multiple selon l'une des revendications précédentes, **caractérisé en ce que** le joint périphérique (4) comporte des ailes (5) qui recouvrent partiellement la surface extérieure du vitrage.

7. Vitrage multiple selon l'une des revendications précédentes, **caractérisé en ce que** le joint périphérique comporte au moins une excroissance (28).

8. Vitrage multiple selon l'une des revendications précédentes, **caractérisé en ce** qu'il présente une partie périphérique de montage standard, dont la forme et les dimensions sont indépendantes de l'épaisseur de la lame d'air et de l'épaisseur des feuilles de verre qui constituent le vitrage.

9. Procédé de fabrication d'un vitrage multiple selon l'une quelconque des revendications 1 à 8, **caractérisé en ce** qu'il comporte la pose sur une première feuille de verre d'un cadre entretoise, l'application sur ce cadre d'une seconde feuille de verre, l'amenée du vitrage provisoire au poste de moulage, le plaquage par traction de chaque feuille de vitrage contre une paroi du moule et l'injection dans le moule, sous une pression comprise entre 3 et 10 bars du mélange réactif.

10. Procédé selon la revendication 9, **caractérisé en ce que** le moule est incliné pendant la phase d'injection, l'injection s'effectuant par le bas.

11. Procédé selon l'une des revendications 9 ou 10, **caractérisé en ce que** le mélange réactif est injecté dans le moule à une température de l'ordre de la température du mastic à base de caoutchouc butyl et/ou polyisobutylène.

12. Procédé selon la revendication 11, **caractérisé en ce que** le mélange réactif est injecté dans un moule uniformément chauffé entre 40 et 70° C.

13. Procédé selon la revendication 10, **caractérisé en ce que** l'injection est effectuée en environ 90 secondes.

14. Procédé selon l'une des revendications précédentes, **caractérisé en ce que** le plaquage par traction des feuilles de verre est obtenu par étirement par le vide des deux feuilles de verre.

15. Dispositif pour la mise en oeuvre du procédé selon l'une des revendications 9 à 14 constitué d'un moule formé de deux demi-moules (44, 45) laissant deux ouvertures - une lèvre d'injection (42) alimentée au travers d'une chambre d'homogénéisation et un évent (43) -, **caractérisé en ce** qu'il comporte des moyens de traction des feuilles de verre constitués par des chambres (47, 48) placées sous dépression au travers de canaux (40, 41) et en ce que les deux demi-moules (44, 45) présentent une arête d'étanchéité (65).

16. Dispositif selon la revendication 15, **caractérisé en ce que** le moule comporte un espaceur (63) qui délimite la paroi latérale de la cavité (57) d'injection du polyuréthane.

17. Dispositif selon l'une des revendications 15 ou 16, **caractérisé en ce que** les deux demi-moules (44, 45) comportent des logements (55, 56) pour des patins (54, 54') qui empêchent le glissement du vitrage.

18. Dispositif selon l'une des revendications 15 à 17, **caractérisé en ce** qu'en amont de la lèvre d'injection dans le moule est prévu un circuit de mélangeage des deux composants comportant au moins une chambre volumétrique par composant les chambres volumétriques étant purgées à l'aide d'un piston commun commandé par des signaux indépendant de fin de remplissage des deux chambres.

19. Dispositif selon l'une des revendications 15 à 18, **caractérisé en ce** qu'après avoir été mis en contact, les composants du mélange réactif circulent au travers d'un mélangeur statique comportant une alternance de chambres de détente (120) coaxiales et de conduites de laminage (119).

## Patentansprüche

1. Mehrfachverglasung aus mindestens zwei durch eine zwischenliegende Gasschicht (2,12,22) voneinander getrennten Glasscheiben (1,11,21) und einem Distanzrahmen (3,13,16), der mindestens an seiner Kontaktfläche (13,16) mit den Glasscheiben (1,11,21) aus einem Mastix auf der Grundlage von Butylkautschuk und/oder Polyisobutylen gebildet ist und von einer peripheren Dichtung (4,17) aus wasserdichtem Polyurethan bedeckt ist und der die Glasscheiben (1,11,21) in ihren Relativstellungen hält, **dadurch gekennzeichnet, daß** die periphere Dichtung durch reaktives Einspritzen bei einem Druck zwischen 3 und 10 Bar erzeugt wird und an dem Mastix cohäsiv haftet.

2. Mehrfachverglasung nach Anspruch 1, **dadurch gekennzeichnet, daß** der Distanzrahmen (3) durch einen Strang auf der Grundlage von Butylkautschuk und/oder Polyisobutylen gebildet ist.

3. Mehrfachverglasung nach Anspruch 1, **dadurch gekennzeichnet, daß** der Distanzrahmen aus einem steifen Profil (13) gebildet ist, das auf seiner Kontaktfläche (16) mit dem Glas durch eine Dichtung auf der Basis von Butylkautschuk und/oder Polyisobutylen bedeckt ist.

4. Mehrfachverglasung nach einem der vorhergehenden Ansprüche, **dadurch gekennzeichnet, daß** das Polyurethan eine Aushärtzeit von weniger als 2 Minuten hat.

5. Mehrfachverglasung nach einem der vorhergehenden Ansprüche, **dadurch gekennzeichnet, daß** das Polyurethan nach der Kondensation eine Anfangshärte von 50 bis 70 Shore A, eine Bruchdehnung von 400% bei 20°C und eine bleibende Druckverformung unter 25% nach einem 24-stündigen Versuch bei 70°C aufweist.

6. Mehrfachverglasung nach einem der vorhergehenden Ansprüche, **dadurch gekennzeichnet, daß** die periphere Dichtung (4) Flansche (5) aufweist, die die Außenfläche der Verglasung teilweise bedecken.

7. Mehrfachverglasung nach einem der vorhergehenden Ansprüche, **dadurch gekennzeichnet, daß** die periphere Dichtung mindestens eine Ausstülpung (28) beinhaltet.

8. Mehrfachverglasung nach einem der vorhergehenden Ansprüche, **dadurch gekennzeichnet, daß** sie einen peripheren Teil als Montagestandardrahmen enthält, dessen Form und Abmessungen unabhängig von der Dicke der Luftschicht und der Dicke der die Verglasung bildenden Glasscheiben sind.

9. Verfahren zur Herstellung einer Mehrfachverglasung nach einem der Ansprüche 1 bis 8, **gekennzeichnet durch** die Anordnung eines Distanzrahmens auf einer ersten Glasscheibe, das Aufbringen einer zweiten Scheibe auf den Rahmen, die Zuführung der provisorischen Verglasung zur Formstation, Auflegen jeder Scheibe der Verglasung unter Zug gegen eine Formwand und Einspritzen des reaktiven Gemisches in die Form bei einem Druck zwischen 3 und 10 Bar.

10. Verfahren nach Anspruch 9, **dadurch gekennzeichnet, daß** die Form während der Einspritzphase geneigt ist, wobei das Einspritzen von unten stattfindet.

11. Verfahren nach einem der Ansprüche 9 oder 10, **dadurch gekennzeichnet, daß** das reaktive Gemisch bei einer Temperatur, die in etwa gleich der Temperatur des Mastix auf der Grundlage von Butylkautschuk und/oder Polyisobutylen ist, in die Form eingespritzt wird.

12. Verfahren nach Anspruch 11, **dadurch gekennzeichnet, daß** das reaktive Gemisch in eine gleichmäßig auf eine Temperatur zwischen 40° und 70°C erhitzte Form eingespritzt wird.

13. Verfahren nach Anspruch 10, **dadurch gekennzeichnet, daß** das Einspritzen in etwa 90 Sekunden durchgeführt wird.

14. Verfahren nach einem der vorhergehenden Ansprüche, **dadurch gekennzeichnet, daß** das Einlegen der Glasscheiben unter Zug durch Einspannen der Glasscheiben mittels Vakuum erreicht wird.

15. Vorrichtung zur Durchführung des Verfahrens nach einem der Ansprüche 9 bis 14, mit einer aus zwei Formhälften (44,45) bestehenden Form, bei der die Formhälften zwei Öffnungen freilassen - eine Einspritzöffnung (42), die durch eine Homogenisierungskammer hindurch gespeist wird, und eine Entlüftungsöffnung (43) -, **dadurch gekennzeichnet, daß** die Vorrichtung eine Einrichtung zur Ausübung einer Zugwirkung auf die Glasscheiben aufweist, die von Kammern (47,48) gebildet wird, die über Kanäle (40,41) unter Unterdruck gesetzt werden, und daß die zwei Formhälften (44,45) eine Dichtsperre (65) aufweisen.

16. Vorrichtung nach Anspruch 15, **dadurch gekennzeichnet, daß** die Form ein Distanzstück (63) beinhaltet, das die Seitenwand des Hohlraums (57) für das Einspritzen des Polyethurans begrenzt.

17. Vorrichtung nach einem der Ansprüche 15 oder 16, **dadurch gekennzeichnet, daß** die zwei Formhälften (44,45) Aufnahmen (55,56) für Klötze (54,54') beinhalten, die das Rutschen der Verglasung verhindern.

18. Vorrichtung nach einem der Ansprüche 15 bis 17, **dadurch gekennzeichnet, daß** oberhalb der Einspritzöffnung in der Form ein Kreislauf zum Mischen der beiden Bestandteile vorgesehen ist, der mindestens eine volumetrische Kammer pro Bestandteil enthält, wobei die volumetrischen Kammern mit Hilfe eines gemeinsamen Kolbens entleert werden, der durch unabhängige Signale vom Ende des Füllvorgangs der zwei Kammern gesteuert wird.

19. Vorrichtung nach einem der Ansprüche 15 bis 18, **dadurch gekennzeichnet, daß** die Bestandteile der reaktiven Mischung, nachdem sie miteinander in Berührung gebracht wurden, durch einen statischen Mischer hindurch zirkulieren, der eine Aufeinanderfolge von koaxialen Entspannungskammern (120) und Kalandrierleitungen (119) enthält.

**Claims**

1. Multiple glazing comprising at least two sheets of glass (1, 11, 21) separated by a tongue (2, 12, 22) of intercalated air and defined by a spacing frame (3, 13, 16) constituted at least with respect to its contact surface (3,16) with the glass sheets (1, 11, 21) by a mastic based on butyl rubber and/or polyisobutylene, and covered by a watertight polyurethane peripheral joint (4, 17) and maintaining the glass sheets (1, 11, 21) in their relative positions, characterized in that said peripheral joint (4, 17) is obtained by reactive injection under a pressure between 3 and 10 bars and adheres cohesively with said mastic.

2. Multiple glazing according to claim 1, characterized in that the spacing frame (3) is constituted by a butyl rubber and/or polyisobutylen-based ribbon.

3. Multiple glazing according to claim 1, characterized in that the spacing frame is constituted by a rigid profiled section (13) covered on its contact surface (16) with the glass by a butyl rubber and/or polyisobutylene-based joint.

4. Multiple glazing according to any one of the preceding claims, characterized in that the polyurethane has a drawing time less than 2 minutes.

5. Multiple glazing according to any of the preceding claims, characterized in that, after condensation, the polyurethane has an instantaneous hardness between 50 and 70 Shore A, an elongation at break of 400% at 20°C hardness between deformation on compression below 25% after testing for 24 hours at 70°C.

6. Multiple glazing according to any one of the preceding claims, characterized in that the peripheral joint (4) has flanges (5) partly covering the outer surface of the glazing.

7. Multiple glazing according to any one of the preceding claims, characterized in that the peripheral joint has at least one excrescence (28).

8. Multiple glazing according to any one of the preceding claims, characterized in that it has a peripheral standard fitting portion, whose shape and dimensions are independent of the thickness of the air jet and the thickness of the glass sheets forming the glazing.

9. Process for the production of a multiple glazing according to any one of the claims 1 to 8, characterized in that it involves the placing on a first glass sheet of a spacing frame, the application to said frame of a second glass sheet, the movement of the provisional glazing to the moulding station, the engagement by tension of each glazing sheet against a wall of the mould and the injection into the mould of the reactive mixture under a pressure between 3 and 10 bars.

10. Process according to claim 9, characterized in that the mould is inclined during the injection phase, injection taking place from the bottom.

11. Process according to one of the claims 9 or 10, characterized in that the reactive mixture is injected into the mould at a temperature roughly the same as that of the butyl rubber and/or polyisobutylene-based mastic.

12. Process according to claim 11, characterized in that the reactive mixture is injected into a mould uniformly heated to between 40 and 70°C.

13. Process according to claim 10, characterized in that injection takes approximately 90 seconds.

14. Process according to any one of the preceding claims, characterized in that the engagement by tension of the glass sheets is obtained by drawing by vacuum the two glass sheets.

15. Apparatus for performing the process according to any one of the claims 9 to 14 consituted by a mould formed by two half-moulds (44, 45) leaving two openings, an injection lip (42) supplied across a homogenization chamber and a vent (43), characterized in that it has glass sheet tensioning means constituted by chambers (47, 48) placed under a negative pressure across channels (40, 41) and in that the two half-moulds (44, 45) have a sealing edge (65).

16. Apparatus according to claim 15, characterized in that the mould has a spacer (63), which defines the side wall of the polyurethane injection cavity (57).

17. Apparatus according to one of the claims 15 or 16, characterized in that the two half-moulds (44, 45) have recessess (55, 56) for blocks (54, 54') preventing the sliding of the glazing.

18. Apparatus according to any one of the claims 15 to 17, characterized in that upstream of the injection lip in the mould is provided a circuit for mixing the two components having at least one volumetric chamber per component, the volumetric chambers being purged with the aid of a common piston controlled by independent end of filling signals for the two chambers.

19. Apparatus according to any one of the claims 15 to 18, characterized in that after contacting, the components of the reactive mixture circulate through a static mixer incorporating an alternation of coaxial expansion chambers (120) and rolling pipes (119).

FIG.1a

FIG.1b

FIG.1c

FIG.2

FIG_3

EP 0 236 211 B1

FIG.4

EP 0 236 211 B1

FIG.5

A    B    S

119    120    116

119

117

118

# FIG. 6